(19) Europäisches Patentamt / European Patent Office / Office européen des brevets

(11) **EP 2 715 618 B1**

(12) **FASCICULE DE BREVET EUROPEEN**

(45) Date de publication et mention
de la délivrance du brevet:
**01.04.2015   Bulletin 2015/14**

(21) Numéro de dépôt: **12722432.7**

(22) Date de dépôt: **18.04.2012**

(51) Int Cl.:
***G06K 19/073*** *(2006.01)*

(86) Numéro de dépôt international:
**PCT/FR2012/050845**

(87) Numéro de publication internationale:
**WO 2012/164181 (06.12.2012 Gazette 2012/49)**

(54) **SÉCURISATION D'UNE COMMUNICATION PAR UN TRANSPONDEUR ÉLECTROMAGNÉTIQUE**

HERSTELLUNG EINER SICHEREN KOMMUNIKATION DURCH EINEN ELEKTROMAGNETISCHEN TRANSPONDER

MAKING A COMMUNICATION SECURE THROUGH AN ELECTROMAGNETIC TRANSPONDER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **03.06.2011  FR 1154864**

(43) Date de publication de la demande:
**09.04.2014   Bulletin 2014/15**

(73) Titulaire: **STMicroelectronics (Rousset) SAS
13790 Rousset (FR)**

(72) Inventeur: **WUIDART, Luc
83910 Pourrieres (FR)**

(74) Mandataire: **Thibon, Laurent
Cabinet Beaumont
1, rue Champollion
38000 Grenoble (FR)**

(56) Documents cités:
**US-A1- 2005 141 256     US-A1- 2009 065 575**

**Description**

Domaine de l'invention

La présente invention concerne de façon générale des systèmes utilisant des transpondeurs, c'est-à-dire des émetteurs-récepteurs (généralement mobiles), susceptibles de communiquer sans contact et sans fil avec un terminal.
L'invention concerne plus particulièrement la sécurisation d'une communication en champ proche entre un transpondeur et un lecteur.

Exposé de l'art antérieur

Des systèmes à transpondeurs électromagnétiques sont de plus en plus utilisés avec l'apparition des dispositifs mobiles de télécommunication équipés de routeurs de communication en champ proche (NFC - Near Field Communication). Dans ces dispositifs, l'équipement mobile peut servir à la fois de lecteur de transpondeur, par exemple de lecteur de cartes à puce sans contact, et à l'inverse de transpondeur pour communiquer en champ proche avec un terminal, par exemple un autre dispositif mobile, une borne d'accès, etc.
On connaît de nombreuses méthodes visant à sécuriser les transactions entre un transpondeur électromagnétique et un lecteur. Ces méthodes ont généralement recours à des systèmes de chiffrement des communications, que ce soit par des algorithmes symétriques ou asymétriques.
Tous ces systèmes requièrent que la communication soit établie pour rendre possible la sécurisation de la transaction.
De plus, ces méthodes sont généralement peu efficaces pour empêcher qu'un dispositif pirate simulant un terminal n'entame une communication avec un transpondeur.

Résumé

Un objet d'un mode de réalisation de la présente invention est de proposer un mécanisme de sécurisation d'une communication entre un transpondeur électromagnétique et un terminal qui pallie tout ou partie des inconvénients des solutions usuelles.
Un autre objet d'un mode de réalisation de la présente invention est de proposer une solution ne requérant pas d'établissement d'une communication pour détecter la présence éventuelle d'un terminal pirate.
Un autre objet d'un mode de réalisation de la présente invention est de proposer une solution compatible avec les processus habituels de chiffrement des communications.
Un autre objet d'un mode de réalisation de la présente invention est de proposer une solution ne requérant aucune modification côté terminal.
Pour atteindre tout ou partie de ces objets ainsi que d'autres, on prévoit un procédé de sécurisation d'une communication entre un transpondeur électromagnétique et un terminal, dans lequel l'émission d'un accusé de réception par le transpondeur à une requête captée d'un terminal n'est autorisée que lorsque le transpondeur est en contact mécanique ou en quasi-contact mécanique avec le terminal.
Selon un mode de réalisation de la présente invention:

a) une valeur courante d'un rapport entre le facteur de couplage courant entre le transpondeur et le terminal et un facteur de couplage optimum avec une première valeur de charge résistive est calculée et mémorisée ;
b) ladite valeur courante est comparée à une valeur précédente de ce rapport, mémorisée lors d'une itération précédente ; et
c) tant que les deux valeurs du rapport ne sont pas égales, on réitère les étapes a) et b).

Selon un mode de réalisation de la présente invention, les valeurs dudit rapport sont obtenues suite aux mesures :

d'une première valeur d'une tension continue fournie par un redresseur aux bornes d'un circuit oscillant du transpondeur pour une première valeur de charge résistive de ce circuit oscillant ; et
d'une seconde valeur de ladite tension pour une seconde valeur de charge résistive.

Selon un mode de réalisation de la présente invention, en cas d'égalité entre les rapports courant et précédent :

d) le rapport courant est comparé à 1 ; et
e) l'envoi d'un accusé de réception est autorisé si ce seuil unitaire n'est pas atteint.

Selon un mode de réalisation de la présente invention, si le rapport courant est supérieur à 1 :

l'envoi de l'accusé de réception est précédé d'une diminution de la valeur de la charge résistive si le rapport courant est inférieur à un seuil.

Selon un mode de réalisation de la présente invention, la valeur de la charge résistive est diminuée jusqu'à obtenir, aux bornes du circuit oscillant une tension respectant la formule suivante :

$$V_{C2opt]R21} = \left(1 + \frac{1}{r_i^2}\right) \cdot \frac{V_{C2]R20}}{2} \, ,$$

où $V_{C2]R20}$ désigne ladite première valeur de la tension et $r_i$ le rapport courant.

Selon un mode de réalisation de la présente invention, si le rapport courant est différent du rapport précédent, on bloque l'émission éventuelle d'un accusé de réception.

On prévoit également un transpondeur électromagnétique, comportant des moyens adaptés à la mise en oeuvre du procédé.

On prévoit également un téléphone mobile comportant un tel transpondeur électromagnétique.

Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :

la figure 1 représente, de façon très schématique, un exemple de système de communication en champ proche ;
la figure 2 est un schéma bloc simplifié d'un terminal et d'un transpondeur d'un système de communication en champ proche ;
la figure 3 illustre un exemple d'évolution de la tension aux bornes du circuit résonant du transpondeur en fonction d'un couplage normalisé ;
la figure 4 est un schéma bloc illustrant un mode de de mise en oeuvre du procédé de sécurisation ; et
la figure 5 est un schéma bloc d'un mode de réalisation d'un transpondeur adapté à évaluer son facteur de couplage avec un terminal.

Description détaillée

De mêmes éléments ont été désignés par de mêmes références aux différentes figures. Pour des raisons de clarté, seuls les étapes et éléments utiles à la compréhension des modes de réalisation décrits ont été représentés et seront détaillés. En particulier, la provenance et la destination des données transmises lors des communications entre un transpondeur et un terminal n'ont pas été détaillées, les modes de réalisation décrits étant compatibles avec toute communication usuelle.

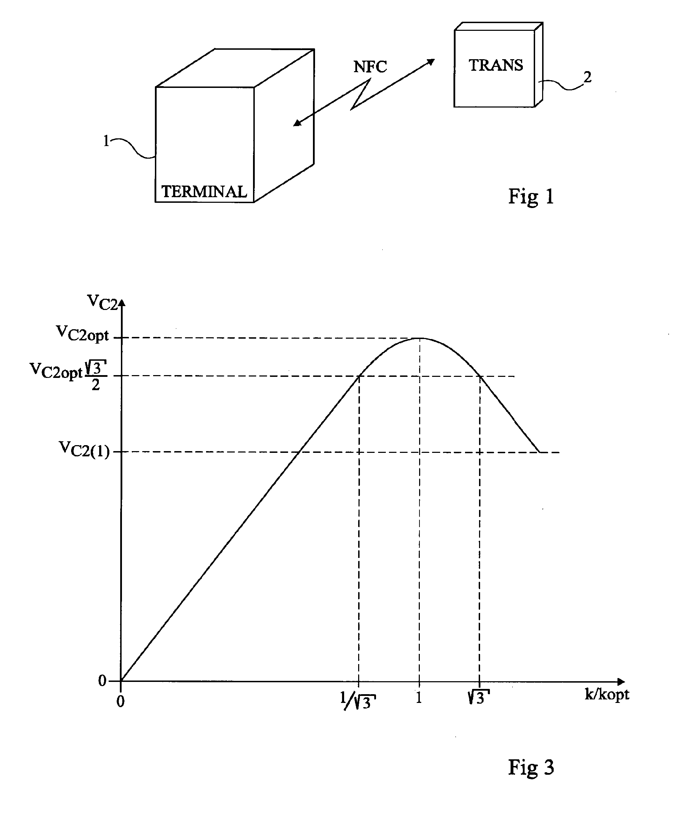

La figure 1 est un schéma bloc d'un système de communication à transpondeur électromagnétique. Un terminal 1 (TERMINAL) est susceptible de communiquer en champ proche (par exemple selon un protocole NFC, Near Field Communication) avec un élément distant, à savoir un transpondeur 2 (TRANS).

Le terminal peut prendre différentes formes, par exemple une borne de validation de titres de transport, un lecteur de passeports électronique, un ordinateur portable, un dispositif mobile de communication (téléphone mobile ou smartphone, assistant numérique personnel - PDA, etc.), un boîtier électronique de démarrage de véhicule automobile, etc.

Le transpondeur peut également prendre différentes formes, par exemple, un carte à puce, un titre de transport électronique, un passeport électronique, un terminal de télécommunication (smartphone, PDA, etc.), une étiquette électronique, etc.

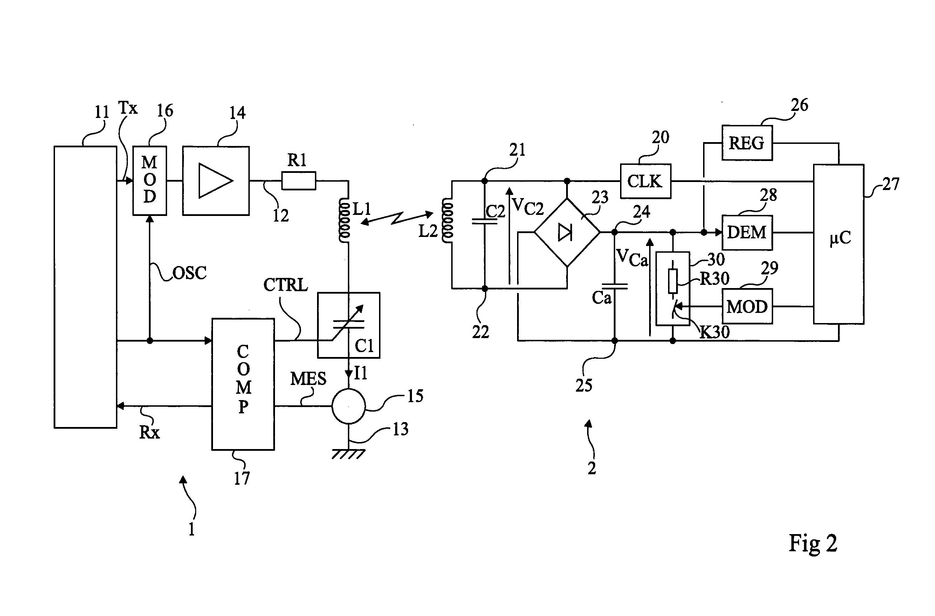

La figure 2 représente, de façon très schématique et simplifiée, un exemple de terminal 1 et de transpondeur 2.

Le terminal 1 comporte un circuit oscillant, généralement série, formé d'une inductance L1 en série avec un condensateur C1 et une résistance R1. Ce circuit oscillant série est, dans l'exemple de la figure 2, connecté entre une borne 12 de sortie d'un amplificateur ou coupleur d'antenne 14 et une borne 13 à un potentiel de référence (généralement la masse). Un élément 15 de mesure du courant dans le circuit oscillant est intercalé, par exemple, entre l'élément capacitif C1 et la masse 13. Cet élément de mesure 15 fait partie d'une boucle de régulation de phase qui sera décrite plus loin. L'amplificateur 14 reçoit un signal de transmission haute fréquence issu d'un modulateur 16 (MOD) qui reçoit une fréquence de référence (signal OSC) par exemple d'un oscillateur à quartz (non représenté). Le modulateur 16 reçoit, si besoin, un signal Tx provenant d'un circuit 11 de commande et d'exploitation des transmissions. Ce circuit 11 est généralement pourvu d'un microprocesseur de traitement de commandes et de données, communiquant avec différents circuits d'entrée/sortie (clavier, écran, élément d'échange avec un serveur, etc.) et/ou de traitement non détaillés. Les éléments du terminal 1 tirent le plus souvent l'énergie nécessaire à leur fonctionnement d'un circuit d'alimentation (non représenté) raccordé, par exemple, au réseau de distribution électrique ou à une batterie (par exemple, celle d'un véhicule automobile ou d'un téléphone ou ordinateur portable). Le modulateur 16 fournit une porteuse haute fréquence (par exemple, à 13,56 MHz) au circuit oscillant L1-C1 qui engendre un champ magnétique.

L'élément capacitif C1 est, par exemple, un élément à capacité variable et commandable par un signal CTRL. Cet élément participe à la régulation de phase du courant I1 dans l'antenne L1 par rapport à un signal de référence. Cette régulation est une régulation du signal haute fréquence, c'est-à-dire du signal de la porteuse correspondant au signal fourni à l'amplificateur 14 en l'absence de données Tx à transmettre. La régulation est effectuée en faisant varier la capacité C1 du circuit oscillant du terminal de façon à maintenir le courant dans l'antenne L1 en relation de phase constante avec le signal de référence. Ce signal de référence correspond, par exemple, au signal OSC fourni au modulateur 16. Le signal CTRL est issu d'un circuit 17 (COMP) dont le rôle est de détecter l'écart de phase par rapport au signal de référence et de modifier en conséquence la capacité de l'élément C1. Le comparateur reçoit une information MES sur le courant I1 dans le circuit oscillant, détectée par l'élément de mesure 15 (par exemple un transformateur d'intensité ou une résistance).

Un transpondeur 2, apte à coopérer avec le terminal 1, comporte un circuit oscillant, par exemple parallèle, formé d'une inductance L2 en parallèle avec un condensateur C2 entre deux bornes 21 et 22. Le circuit oscillant parallèle (appelé circuit résonant en réception) est destiné à capter un champ magnétique engendré par le circuit oscillant L1-C1 du terminal 1. Les circuits L2-C2 et L1-C1 sont accordés sur une même fréquence de résonance (par exemple 13,56 MHz). Les bornes 21 et 22 sont reliées à deux bornes d'entrée alternative d'un pont redresseur 23 (le plus souvent double alternance). Les bornes de sortie redressées du pont 23 définissent respectivement une borne positive 24 et une borne de référence 25. Un condensateur Ca est connecté entre les bornes 24 et 25 de façon à lisser la tension redressée. Le cas échéant, l'énergie récupérée sert à recharger une batterie non représentée.

Quand le transpondeur 2 se trouve dans le champ du terminal 1, une tension haute fréquence est engendrée aux bornes du circuit résonant L2-C2. Cette tension, redressée par le pont 23 et lissée par le condensateur Ca, fournit une tension d'alimentation à des circuits électroniques du transpondeur par l'intermédiaire d'un régulateur de tension 26 (REG). Ces circuits comprennent généralement une unité de traitement 27 (par exemple un microcontrôleur $\mu$C) associée à une mémoire (non représentée), un démodulateur 28 (DEM) des signaux éventuellement reçus du terminal 1, et un modulateur 29 (MOD) pour transmettre des informations au terminal. Le transpondeur est généralement synchronisé au moyen d'une horloge (CLK) extraite, par un bloc 20, du signal haute fréquence récupéré, avant redressement, sur une des bornes 21 ou 22. Le plus souvent, tous les circuits électroniques du transpondeur 2 sont intégrés dans une même puce.

Pour transmettre des données du terminal 1 vers le transpondeur 2, le circuit 16 module (généralement en amplitude) la porteuse (signal OSC) en fonction du signal Tx. Côté transpondeur, ces données sont démodulées par le démodulateur 28 à partir de la tension $V_{Ca}$ aux bornes du condensateur Ca. Le cas échéant, le démodulateur prélève le signal à démoduler en amont du pont de redressement.

Pour transmettre des données du transpondeur 2 vers le terminal 1, le modulateur 29 commande un étage de modulation 30 (rétromodulation) de la charge constituée par les circuits du transpondeur sur le champ magnétique produit par le terminal. Cet étage est généralement constitué d'un interrupteur électronique K30 (par exemple, un transistor) et d'une résistance R30 (ou d'une capacité), en série entre les bornes 24 et 25. L'interrupteur K30 est commandé à une fréquence (par exemple, 847,5 kHz) dite de sous-porteuse, nettement inférieure (généralement avec un rapport d'au moins 10) à la fréquence du signal d'excitation du circuit oscillant du terminal 1. Lorsque l'interrupteur K30 est fermé, le circuit oscillant du transpondeur est soumis à un amortissement supplémentaire par rapport à la charge constituée par les circuits 20, 26, 27, 28 et 29 de sorte que le transpondeur prélève une quantité d'énergie plus importante du champ magnétique haute fréquence. Côté terminal 1, l'amplificateur 14 maintient constante l'amplitude du signal d'excitation haute fréquence. Par conséquent, la variation d'énergie du transpondeur se traduit par une variation d'amplitude et de phase du courant dans l'antenne L1. Cette variation est détectée par un démodulateur d'amplitude ou de phase du terminal. Dans le mode de réalisation illustré en figure 2, le comparateur 17 intègre un démodulateur de phase servant également à démoduler le signal provenant du transpondeur. Par conséquent, ce comparateur 17 fournit un signal Rx restituant une rétromodulation éventuelle de données reçues d'un transpondeur au circuit 11. D'autres circuits de démodulation peuvent être prévus, par exemple un circuit exploitant une mesure de la tension aux bornes du condensateur C1.

De nombreuses variantes existent pour coder/décoder et moduler/démoduler les communications entre un transpondeur et un terminal.

Le temps de réponse de la boucle de régulation de phase est choisi suffisamment long pour ne pas gêner la rétromodulation éventuelle provenant d'un transpondeur, et suffisamment court devant la vitesse de passage d'un transpondeur dans le champ du terminal. On peut parler de régulation statique par rapport aux fréquences de modulation (par exemple, une fréquence de la porteuse de téléalimentation de 13,56 MHz et une fréquence de rétromodulation de 847,5 kHz) utilisées pour transmettre des données du transpondeur vers le terminal.

Un exemple de terminal à régulation de phase est décrit dans le document EP-A-0 857 981. Le fait que la phase soit régulée côté terminal permet d'exploiter des mesures de courant et de tension dans le circuit oscillant du transpondeur pour en déduire des informations relatives au couplage du transpondeur lorsqu'il est dans le champ d'un terminal.

Ces informations prennent en compte, notamment, le couplage entre le transpondeur et le terminal, c'est-à-dire le coefficient de couplage entre le circuit oscillant du terminal et celui du transpondeur. Ce coefficient de couplage dépend essentiellement de la distance séparant le transpondeur du terminal. Le coefficient de couplage, noté k, entre les circuits oscillants d'un transpondeur et d'un terminal est toujours compris entre 0 et 1.

Quand le transpondeur est posé contre le terminal, on considère que l'on est dans une position de couplage maximal. On ne peut en effet plus rapprocher davantage les antennes du transpondeur et du terminal sauf à supprimer le boîtier du terminal.

Selon les modes de réalisation décrits, on utilise différentes relations liant les grandeurs électriques mesurables par le transpondeur dans différentes configurations de fonctionnement avec un terminal pour contraindre le porteur du transpondeur à se placer le plus près possible du terminal. L'objectif est alors d'éviter qu'un terminal pirate ne vienne établir une communication avec le transpondeur en étant plus loin que le terminal avec lequel le transpondeur veut communiquer.

Un autre objectif est de rassurer le porteur du transpondeur. En effet, les applications ont souvent trait à des paiements ou à des authentifications. Le fait de ne permettre un établissement d'une communication que lorsque le transpondeur est "posé" sur le terminal rassure l'utilisateur.

Pour cela, on prévoit de forcer l'utilisateur à placer le transpondeur dans une position de quasi-contact (distance inférieure à un mm), de préférence en contact mécanique, avec le terminal que ce soit en bougeant le terminal ou le transpondeur selon les cas. Cela revient à contraindre le transpondeur à être dans une position de couplage maximum avec son terminal.

La notion de contact utilisée ici est un contact mécanique avec le boîtier du terminal, c'est-à-dire une position où les antennes du terminal et du transpondeur sont les plus proches possibles l'une de l'autre. Il ne s'agit pas d'un contact électrique, la communication et la téléalimentation éventuelle du transpondeur s'effectuant toujours sans contact électrique.

Habituellement, un terminal envoie périodiquement et en permanence des requêtes d'interrogation à destination d'éventuels transpondeurs présents dans son champ. Un transpondeur qui capte une telle requête répond au terminal par un accusé de réception (message généralement désigné ATQ) afin de signaler sa présence au terminal et de permettre à celui-ci d'entamer la communication.

Dans les modes de réalisation qui vont être décrits, on restreint l'envoi de l'accusé de réception pour ne l'envoyer qu'une fois qu'on sait que le transpondeur est en face d'un terminal, a priori autorisé et en quasi-butée avec celui-ci.

Il est désormais connu qu'il existe entre le terminal et le transpondeur une position de couplage optimum $k_{opt}$ qui correspond à la position à laquelle la tension $V_{C2}$, récupérée aux bornes du transpondeur (plus précisément de son antenne), est maximale. Cette position de couplage optimum ne correspond pas nécessairement à la position de couplage maximal.

La figure 3 représente un exemple d'allure de la tension $V_{C2}$ récupérée côté transpondeur en fonction du couplage normalisé $k/k_{opt}$.

La courbe part de l'origine des ordonnées (tension nulle) pour un couplage nul. Cela correspond à un éloignement du transpondeur et du terminal tel qu'aucun signal n'est capté par le transpondeur. La tension $V_{C2}$ atteint un maximum $V_{C2opt}$ pour un coefficient de couplage $k_{opt}$ optimum ($k/k_{opt} = 1$), puis décroît vers une valeur intermédiaire $V_{C2}(1)$ atteinte au couplage 1. La position de couplage maximal se trouve à un endroit donné de cette courbe mais pas nécessairement à la position de couplage optimum. Cela dépend en particulier des différentes valeurs des éléments capacitifs et résistifs.

Deux autres points remarquables de la figure 3 sont des points d'inflexion, où le rapport $k/k_{opt}$ vaut respectivement $1/\sqrt{3}$ et $\sqrt{3}$, et où la tension $V_{C2}$ a la même valeur $\left( V_{C2opt} \cdot \dfrac{\sqrt{3}}{2} \right)$ côté transpondeur.

Quand le transpondeur a été approché du terminal au maximum par son porteur, on considère que le couplage atteint sa valeur $k_{max}$ en position de butée. Cette position du butée peut correspondre soit à déposer le transpondeur sur l'antenne du terminal soit à son maintien à une certaine distance de celui-ci. La position de couplage maximal peut selon les cas être inférieure ou supérieure à la position de couplage optimum $k_{opt}$.

Des relations exprimant la valeur de la tension $V_{C2}$ en fonction du rapport du couplage courant sur le couplage optimum et reliant la valeur de la résistance équivalente à la charge constituée par les éléments du transpondeur sur son propre circuit oscillant sont désormais habituelles. On note généralement R2 cette résistance équivalente. La résistance R2 représente la résistance équivalente de tous les circuits (microprocesseur, moyen de rétromodulation, etc.) du transpondeur 2 ramenée en parallèle sur le condensateur C2 et l'inductance L2 (avant ou après le pont redresseur). On appelle également "charge résistive" la conductance apportée par les circuits du transpondeur, donc leur consommation. Le niveau de cette charge est symbolisé par la résistance R2 aux bornes du circuit oscillant.

Des relations liant ces grandeurs relatives au couplage et à différentes valeurs prises par la résistance R2 sont données, par exemple dans le document EP-A-2 276 643 (B9617-09-RO-119).

On prévoit d'exploiter ces relations pour contraindre le porteur du transpondeur à se placer en contact ou quasi-contact avec le lecteur.

Pour une valeur de couplage k donnée, en considérant que l'impédance du circuit oscillant du terminal ne varie pas et que les circuits restent accordés, on peut exprimer (par exemple, en exploitant les relations indiquées dans le document susmentionné) le rapport entre les coefficients courants k et les coefficients optimum $k_{opt]R20}$ et $k_{opt]R21}$, respectivement pour une résistance R2 de valeur R20 et de valeur R21 donne :

$$\frac{\dfrac{k}{k_{opt]R20}}}{\dfrac{k}{k_{opt]R21}}} = \sqrt{\frac{R20}{R21}} \cdot \qquad \text{(formule 1)}$$

Toujours dans les mêmes conditions, le carré du rapport, noté r, entre le coefficient courant k et le coefficient optimum $k_{opt]R20}$, en fonction des tensions $V_{C2]R20}$ et $V_{C2]R21}$ de la tension $V_{C2}$, respectivement pour les valeurs R20 et R21 de la résistance R2, peut s'écrire :

$$r^2 = \left(\frac{k}{k_{opt]R20}}\right)^2 = \frac{\dfrac{V_{C2]R21}}{V_{C2]R20}} \cdot \dfrac{R20}{R21} - 1}{1 - \dfrac{V_{C2]R21}}{V_{C2]R20}}} \qquad \text{(formule 2)}$$

Lorsque le couplage est optimum avec la résistance R21 ($k = k_{opt]R21}$), on peut donc également écrire :

$$r^2 = \left(\frac{k}{k_{opt]R20}}\right)^2 = \frac{R20}{R21} \qquad \text{(formule 3)}$$

Pour une position de couplage $k_{opt]R21}$ correspondant au couplage optimum avec la résistance R21, on peut écrire :

$$V_{C2opt]R21} = \left(1 + \frac{1}{\left(\dfrac{k}{k_{opt]R20}}\right)^2}\right) \cdot \frac{V_{C2]R20}}{2} \qquad \text{(formule 4)}$$

Ces relations permettent, en faisant varier la valeur de la résistance R2, que le transpondeur détermine lorsqu'il est dans une relation de couplage maximal avec le terminal.

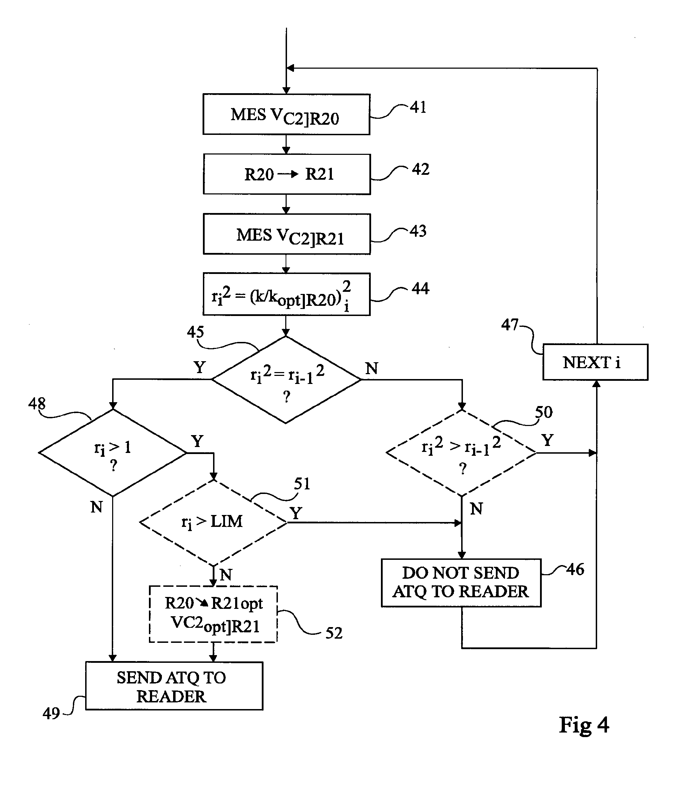

La figure 4 est un organigramme simplifié d'un mode de mise en oeuvre du procédé de sécurisation de transaction.

Pour simplifier l'exposé de la figure 4, on continue à se référer aux valeurs $V_{C2]R20}$ et $V_{C2]R21}$, sachant qu'il est en pratique plus facile de mesurer les valeurs $V_{Ca]R20}$ et $V_{Ca]R21}$ de la tension $V_{Ca}$, mais que cela ne change rien sur les seuils de comparaison du rapport du couplage courant sur le couplage optimum à une valeur donnée de la résistance.

De façon périodique, le transpondeur mesure (bloc 41, MES $V_{C2]R20}$) et mémorise la tension aux bornes du condensateur C2 avec une première valeur R20 de résistance R2.

Puis (bloc 42, R20 -> R21), on modifie la valeur de l'élément résistif R2 vers une valeur supérieure R21.

On calcule et on mémorise alors (bloc 44, $r_i^2 = (k/k_{opt]R20})_i^2$, la valeur courante du rapport du couplage k par rapport à la valeur optimum $k_{opt]R20}$ avec la résistance R20, le tout élevé au carré. Ce calcul est effectué, par exemple, d'après la formule 2 ci-dessus. En variante, on pourra diminuer la valeur vers une valeur R21 inférieure.

On compare alors (bloc 45, $r_i^2 = r_{i-1}^2$ ?) le rapport courant par rapport au rapport $r_{i-1}$ calculé à l'itération précédente (i-1). Ce test revient à déterminer si la distance entre le transpondeur et le terminal varie. On notera qu'on peut également comparer directement les carrés des rapports.

Si la distance varie (sortie N du bloc 45), c'est-à-dire que l'utilisateur bouge l'un des deux éléments par rapport à l'autre, le transpondeur ne peut pas être en contact avec le terminal. On interdit alors (bloc 46, DO NOT SEND ATQ TO READER) l'envoi d'un accusé de réception par le transpondeur à une requête qu'il reçoit du terminal et on boucle sur la mesure suivante (bloc 47, NEXT i).

Si la distance ne varie plus (sortie Y du bloc 45), on détermine alors (bloc 48, $r_i > 1$ ?) si le rapport courant est supérieur à 1. Cela revient à considérer que le couplage maximal est atteint pour une valeur supérieure au couplage optimal.

Si le rapport $r_i$ est supérieur à 1 (sortie Y du bloc 48), cela signifie qu'il est possible que l'on soit en face d'un terminal, pirate et on rejoint alors l'entrée du bloc 46 interdisant l'envoi d'un accusé de réception.

Dans le cas contraire, (sortie N du bloc 48), on considère que le transpondeur est posé sur l'antenne du lecteur et qu'il peut envoyer un accusé de réception (bloc 49, SEND ATQ TO READER).

Selon une première variante optionnelle illustrée en pointillés, tant que le transpondeur n'est pas en butée (sortie N du bloc 45), on regarde (bloc 50, $r_i^2 > r_{i-1}^2$ ?) si le rapport courant (ou son élévation au carré) est supérieur au rapport précédent. Dans l'affirmative (sortie Y du bloc 50), cela signifie que le transpondeur est en train de se rapprocher du terminal et on passe à l'étape 47. Dans la négative, (sortie N du bloc 50), cela signifie que le transpondeur s'écarte et, avant de passer à l'itération suivante, on interdit alors l'envoi d'un accusé de réception (bloc 46).

Interdire/autoriser l'envoi d'un accusé de réception revient, dans une réalisation simple, à modifier l'état d'un bit (drapeau) conditionnant l'envoi des accusés de réception ATQ. En variante, l'étape 46 peut être omise dans la mesure où il n'y a pas alors à proprement parler de procédure d'interdiction. Simplement, le transpondeur ne passe dans un processus de réponse (envoi d'accusé de réception) que si un terminal autorisé et en butée est détecté.

Selon une autre variante optionnelle, on exploite les relations pour, si possible, faire coïncider le couplage maximal avec le couplage optimum et optimiser ainsi la sécurité de la communication. En effet, cela impose un point de fonctionnement tel que, dès que le transpondeur s'écarte du terminal, cela se traduit par une diminution de la tension récupérée.

Selon cette variante illustrée en pointillés en figure 4, une fois que les tests 45 et 48 ont validé que l'on est dans la position de couplage maximal, on compare (bloc 51, $r_i > LIM$) la valeur courante du rapport $r_i$ par rapport à une valeur limite. Si cette valeur limite n'est pas atteinte, on provoque (bloc 52, R20 -> R21$_{opt}$, $V_{C2opt]R21}$) une diminution de la valeur de la résistance R2 jusqu'à obtenir une tension $V_{C2}$ égale à $V_{C2opt]R21}$. Cette valeur est, de préférence, calculée au préalable par application de la formule 4. De cette manière, on fait coïncider le couplage $k_{max}$ de butée avec l'optimum critique de façon à ce que tout écartement du transpondeur du terminal entraîne une diminution de sa tension de téléalimentation, puisque l'on se retrouve alors dans la partie monotone décroissante en fonction du couplage de la tension $V_{C2}$ (figure 3).

Si la variante des blocs 51 et 52 est omise, on obtient un système dans lequel un accusé-réception peut être interdit pour rien, ce qui ne nuit pas à la sécurité.

Selon une autre variante, le transpondeur peut mémoriser des rapports qui sont considérés comme irréalistes, voire correspondant à un terminal pirate. En effet, un terminal pirate cherche à minimiser le couplage qu'il aura avec un transpondeur victime en diminuant sa propre résistance ou augmentant son inductance de façon à augmenter le champ émis.

Le transpondeur ne répondra pas au terminal soit parce qu'il atteint une supposée position de butée mais avec un rapport supérieur à une limite réaliste (sortie Y du bloc 51), soit parce que la position la butée n'est pas encore atteinte et qu'il se rapproche encore ou qu'au contraire il s'écarte du terminal.

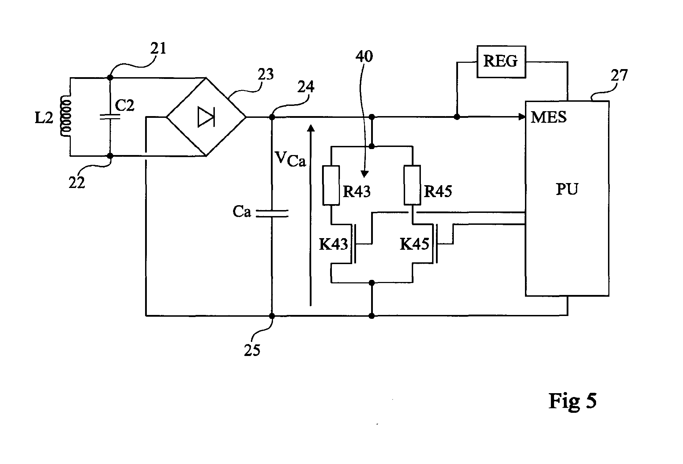

La figure 5 est un schéma bloc de modes de réalisation d'un transpondeur 2 équipé pour déterminer automatiquement, lorsqu'il est dans le champ d'un terminal (non représenté) le rapport entre le couplage courant par rapport au couplage optimum. La représentation de la figure 5 est simplifiée par rapport à celle de la figure 2. En particulier, les éléments de démodulation, de rétromodulation et d'obtention de la fréquence d'horloge n'ont pas été illustrés.

La figure 5 illustre la présence d'un circuit résistif commutable 40 entre les bornes 24 et 25 du pont redresseur 3. Par exemple, deux résistances R43 et R45 sont connectées en parallèle en étant chacune en série avec un interrupteur K43, respectivement K45. Les interrupteurs K43 et K45 (par exemple, des transistors MOS) sont destinés à être commutés comme on le verra par la suite en relation avec la figure 5 pour mettre en oeuvre le procédé d'assistance au positionnement du transpondeur. L'unité de traitement 27 reçoit une information sur la tension $V_{Ca}$ sur une entrée MES pour mettre en oeuvre ce procédé. Dans l'exemple de la figure 5, lorsque les deux résistances R43 et R45 sont fonctionnellement connectées, la résistance R2 (charge des circuits du transpondeur) représente la valeur R20. La déconnexion d'une des résistances (par exemple la résistance R43) augmente la valeur de la résistance R2 vers la valeur R21. D'autres connexions et commutations peuvent être prévues. Par exemple, une seule résistance commutable peut être utilisée en considérant qu'une des deux valeurs de la résistance R2 correspond à la charge résistive des autres circuits du transpondeur.

Selon un mode de réalisation préféré, la résistance commutable correspond à celle utilisée pour une rétromodulation résistive. On effectue une première mesure en commutant la résistance de rétromodulation pour qu'elle soit fonctionnellement dans le circuit (interrupteur K30) à l'état passant dans l'exemple de la figure 2. On mesure alors la tension $U_{C2]R20}$. Puis, on ouvre l'interrupteur K30 et on mesure la tension $V_{C2]R21}$ comme cela a été décrit en relation avec la figure 4. La mise en oeuvre du procédé décrit ne requiert alors aucune modification structurelle d'un transpondeur équipé d'un microcontrôleur. Il suffit de programmer ce microcontrôleur pour qu'il commute ainsi la résistance de rétromodulation.

En variante, l'augmentation ou la diminution de la résistance équivalente R2 est provoquée par une variation de la consommation des circuits du transpondeur, typiquement de l'unité de traitement 27. Par exemple, pour diminuer la valeur de la résistance R2 (augmenter la consommation), on déclenche l'exécution de calculs ou de traitements par l'unité 27. On peut également provoquer une augmentation de la résistance équivalente R2 en réduisant la consommation de l'unité 27 en interrompant certains calculs.

Divers modes de réalisation ont été décrits, diverses variantes et modifications apparaîtront à l'homme de l'art. En particulier, le choix du seuil limite acceptable pour le rapport $r_i$ et le choix de la périodicité des mesures et itérations sont à la portée de l'homme du métier en fonction de l'application. De plus, les relations d'inégalité pourront correspondre à des inégalités strictes ou larges. En outre, la mise en oeuvre pratique de l'invention est à la portée de l'homme du métier à partir des indications fonctionnelles données ci-dessus en utilisant des outils matériels et logiciels habituellement présents dans les transpondeurs. On notera que la mise en oeuvre de ces modes de réalisation ne requiert aucune modification du terminal et ne s'effectue que côté transpondeur.

## Revendications

1. Procédé de sécurisation d'une communication entre un transpondeur électromagnétique (2) et un terminal (1), dans lequel l'émission (49) d'un accusé de réception (ATQ) par le transpondeur à une requête captée d'un terminal n'est autorisée que lorsque le transpondeur est en contact mécanique ou en quasi-contact mécanique avec le terminal.

2. Procédé selon la revendication 1, dans lequel :

   a) une valeur courante ($r_i$) d'un rapport entre le facteur de couplage courant (k) entre le transpondeur et le terminal et un facteur de couplage optimum ($k_{opt]R20}$) avec une première valeur (R20) de charge résistive (R2) est calculée et mémorisée (44) ;
   b) ladite valeur courante est comparée à une valeur précédente ($r_{i-1}$) de ce rapport, mémorisée lors d'une itération précédente ; et
   c) tant que les deux valeurs du rapport ne sont pas égales, on réitère les étapes a) et b).

3. Procédé selon la revendication 2, dans lequel les valeurs dudit rapport sont obtenues suite aux mesures :

   d'une première valeur ($V_{C2]R20}$) d'une tension continue fournie par un redresseur (23) aux bornes d'un circuit oscillant (L2, C2) du transpondeur pour une première valeur (R20) de charge résistive (R2) de ce circuit oscillant ; et

   d'une seconde valeur ($V_{C2]R21}$) de ladite tension pour une seconde valeur (R21) de charge résistive.

4. Procédé selon la revendication 2 ou 3, dans lequel en cas d'égalité entre les rapports courant et précédent :

d) le rapport courant est comparé (48) à 1 ; et

e) l'envoi (49) d'un accusé de réception est autorisé si ce seuil unitaire n'est pas atteint.

**5.** Procédé selon la revendication 4, dans lequel si le rapport courant ($r_i$) est supérieur à 1 :

l'envoi de l'accusé de réception est précédé d'une diminution (52) de la valeur de la charge résistive si le rapport courant est inférieur à un seuil (51).

**6.** Procédé selon la revendication 5, dans lequel la valeur de la charge résistive (R2) est diminuée jusqu'à obtenir, aux bornes du circuit oscillant une tension respectant la formule suivante :

$$V_{C2opt]R21} = \left(1 + \frac{1}{r_i{}^2}\right) \cdot \frac{V_{C2]R20}}{2} \, ,$$

où $V_{C2]R20}$ désigne ladite première valeur de la tension et $r_i$ le rapport courant.

**7.** Procédé selon l'une quelconque des revendications 2 à 6, dans lequel si le rapport courant est différent du rapport précédent, on bloque l'émission éventuelle d'un accusé de réception (46).

**8.** Transpondeur électromagnétique, comportant des moyens adaptés à la mise en oeuvre du procédé conforme à l'une quelconque des revendications précédentes.

**9.** Téléphone mobile comportant un transpondeur électromagnétique conforme à la revendication 8.

**Patentansprüche**

**1.** Ein Verfahren zum Schutz einer Kommunikation zwischen einem elektromagnetischen Transponder (2) und einem Anschluss (1), wobei die Übertragung (49) eines Anerkenntnisses (ATQ) für eine Anforderung empfangen von einem Anschluss durch den Transponder nur gestattet wird, wenn der Transponder sich in einem mechanischen Kontakt oder in einem quasi-mechanischen Kontakt mit dem Anschluss befindet.

**2.** Das Verfahren nach Anspruch 1, wobei:

a) ein laufender Wert ($r_i$) eines Verhältnisses des Strom-Kopplungsfaktors (k) zwischen dem Transponder und dem Anschluss auf einen optimalen Kopplungsfaktor ($k_{opt]R20}$) mit einem ersten Wert (R20) der Widerstandslast (R2) berechnet und gespeichert wird (44);

b) der erwähnte laufende Wert verglichen wird mit einem vorherigen Wert ($r_{i-1}$) dieses Verhältnisses gespeichert in einer vorhergehenden Iteration; und

c) solange wie die zwei Werte des Verhältnisses nicht gleich sind die Schritte a) und b) wiederholt werden.

**3.** Das Verfahren nach Anspruch 2, wobei die Werte des Verhältnisses erhalten werden nach den Messungen:

eines ersten Werts ($V_{C2]R20}$) einer Gleichspannung vorgesehen durch einen Gleichrichter (23) an der Oszillationsschaltung (L2, C2) des Transponders für einen ersten Wert (R20) der Widerstandslast (R2) dieser Oszillationsschaltung; und

eines zweiten Werts ($V_{C2]R21}$) der erwähnten Spannung für einen zweiten Widerstandslastwert (R21).

**4.** Das Verfahren nach Anspruch 2 oder 3, wobei im Falle, dass die laufenden und vorherigen Verhältnisse gleich sind:

d) der laufende Wert mit 1 verglichen (48) wird; und

e) die Sendung (49) eines Anerkenntnisses gestattet wird, wenn diese Einheitsschwelle nicht erreicht ist.

**5.** Das Verfahren nach Anspruch 4, wobei dann, wenn das laufende Verhältnis ($r_i$) größer ist als 1:

dem Senden des Anerkenntnisses eine Verringerung (52) des Werts der Widerstandslast vorausgeht, wenn das laufende Verhältnis kleiner ist als eine Schwelle (51).

6. Das Verfahren nach Anspruch 5, wobei der Wert der Widerstandslast (R2) verringert wird, um an der Oszillationsschaltung eine Spannung zu erhalten, die mit der folgenden Formel übereinstimmt:

$$V_{C2opt]R21} = \left(1 + \frac{1}{r_i^2}\right) \cdot \frac{V_{C2]R20}}{2} ,$$

wobei $V_{C2]R20}$ den erwähnten ersten Wert der Spannung bezeichnet und $r_i$ das laufende Verhältnis bezeichnet.

7. Das Verfahren nach einem der Ansprüche 2 bis 6, wobei dann, wenn das laufende Verhältnis unterschiedlich von dem vorhergehenden Verhältnis ist, die mögliche Übertragung eines Anerkenntnisses blockiert (46) wird.

8. Ein elektromagnetischer Transponder, der Mittel aufweist zum Implementieren des Verfahrens irgendeines der vorhergehenden Ansprüche.

9. Ein Mobiltelefon, das den elektromagnetischen Transponder nach Anspruch 8 enthält.

**Claims**

1. A method for protecting a communication between an electromagnetic transponder (2) and a terminal (1), wherein the transmission (49) of an acknowledgement (ATQ) for a request received from a terminal by the transponder is only allowed when the transponder is in mechanical contact or in quasi-mechanical contact with the terminal.

2. The method of claim 1, wherein:

a) a current value ($r_i$) of a ratio of the current coupling factor (k) between the transponder and the terminal to an optimum coupling factor ($k_{opt]R20}$) with a first value (R20) of the resistive load (R2) is calculated and stored (44); b) said current value is compared with a previous value ($r_{i-1}$) of this ratio, stored in a previous iteration; and c) as long as the two values of the ratio are not equal, steps a) and b) are repeated.

3. The method of claim 2, wherein the values of said ratio are obtained after the measurements:

of a first value ($U_{C2]R20}$) of a D.C. voltage provided by a rectifier (23) across an oscillating circuit (L2, C2) of the transponder for a first value (R20) of the resistive load (R2) of this oscillating circuit; and of a second value ($U_{C2]R21}$) of said voltage for a second resistive load value (R21).

4. The method of claim 2 or 3, wherein, in case the current and previous ratios are equal:

d) the current ratio is compared (48) with 1; and e) the sending (49) of an acknowledgement is allowed if this unity threshold has not been reached.

5. The method of claim 4, wherein if the current ratio ($r_i$) is greater than 1:

the sending of the acknowledgement is preceded by a decrease (52) in the value of the resistive load if the current ratio is smaller than a threshold (51).

6. The method of claim 5, wherein the value of the resistive load (R2) is decreased to obtain, across the oscillating circuit, a voltage complying with the following formula:

$$V_{C2opt]R21} = \left(1 + \frac{1}{r_i^2}\right) \cdot \frac{V_{C2]R20}}{2} \, ,$$

where $V_{C2]R20}$ designates said first value of the voltage and $r_i$ designates the current ratio.

7. The method of any of claims 2 to 6, wherein if the current ratio is different from the previous ratio, the possible transmission of an acknowledgement is blocked (46).

8. An electromagnetic transponder comprising means capable of implementing the method of any of the foregoing claims.

9. A cell phone comprising the electromagnetic transponder of claim 8.

Fig 1

Fig 3

Fig 2

EP 2 715 618 B1

13

MES V$_{C2]}$R20 — 41

R20 → R21 — 42

MES V$_{C2]}$R21 — 43

$r_i^2 = (k/k_{opt]}R20)_i^2$ — 44

45 — $r_i^2 = r_{i-1}^2$ ?

47 — NEXT i

48 — $r_i > 1$ ?

50 — $r_i^2 > r_{i-1}^2$ ?

51 — $r_i > LIM$ ?

52 — R20 → R21opt  VC2$_{opt]}$R21

46 — DO NOT SEND ATQ TO READER

49 — SEND ATQ TO READER

Fig 4

14

**Fig 5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0857981 A

- EP 2276643 A